# EUROPEAN PATENT APPLICATION

(11) **EP 2 103 537 A1**
(43) Date of publication of application: **23.09.2009**
(21) Application number: 09154928.7
(22) Date of filing: 11.03.2009
(51) Int. Cl.: B65D 19/00, B65G 1/00

(54) **Support platform**

(30) Priority: 14.03.2008 US 48720
(71) Applicant: Rehrig Pacific Company, Los Angeles, CA 90058 (US)
(72) Inventor: Baltz, Kyle L, Redondo Beach, CA 90278 (US)
(74) Representative: Lamb, Richard Andrew

(57) **Abstract**

A support platform (10) for use in automated storage and retrieval systems is generally a planar board having an upper support surface (12). The board (10) further includes opposing end edges (14) and opposing side edges (16). The end edges (14) each include first and second interlocking members (18, 20) formed therein. The support platform (10) is placed on the racks (32) in the automated storage and retrieval system with items or containers of items (30) placed thereon. Several support platforms (10) are placed on each rack (32), one behind the other. The end edges (14) of each support platform (10) are interlocked with each adjacent support platform (10), with each first interlocking member (18) interlocked with one of the second interlocking members (20) of an adjacent support platform (10).

## Description

Automated storage and retrieval systems store items or containers of items on racks. The automated storage and retrieval handling equipment lifts and removes the items or containers from the racks and places new items or containers onto the racks.

The racks are relatively deep. Many items or containers are behind other items or containers on the rack, such that the storage and retrieval handling equipment must remove the items or containers in the front in order to access items or containers in the rear.

It is therefore desirable to provide an improved storage rack arrangement, and method of storing items, which addresses the above problems, and/or offers improvements or an alternative to existing arrangements.

According to the present invention there is provided a storage system support board as described in the accompanying claims. There is also provided a storage system and method of operating a storage system as further described in the accompanying claims.

An embodiment of the present invention provides a support platform for use in automated storage and retrieval systems. The support platform is generally a planar board having an upper support surface. The board further includes opposing end edges and opposing side edges. The end edges each include first and second interlocking members formed therein.

The support platform is placed on the racks in the automated storage and retrieval system with items or containers of items placed thereon. Several support platforms are placed on each rack, one behind the other. The end edges of each support platform are interlocked with each adjacent support platform, with each first interlocking member interlocked with one of the second interlocking members of an adjacent support platform.

In use, when the automated storage and retrieval handling equipment retrieves an item from the racks, the handling equipment pulls the first support platform forward on the rack. Because the support platforms on the rack are interlocked, the second support platform and any subsequent support platforms are also pulled forward on the rack until the second support platform reaches the front of the rack. The handling equipment then lifts (or lowers) the first support platform to disengage the first support platform from the second support platform. The handling equipment can then take the support platform and the items or containers thereon to the appropriate location. The second support platform is then at the front of the rack where it is easily accessed by the handling equipment on a subsequent trip.

These and other features of the application can be best understood from the following specification and drawings, the following of which is a brief description.
Figure 1 is a perspective view of a pallet support platform according to one embodiment of the present invention.
Figure 2 is a top view of the support platform of Figure 1.
Figure 3 is an exploded view of the support platform of Figure 1.
Figure 4 is a top view of two support platforms interlocked with one another.
Figure 5 is an enlarged view of the interlocking members of the support platforms of Figure 4.
Figure 6 is a perspective view of the support platforms of Figure 4 with items stored thereon and supported on a rack.

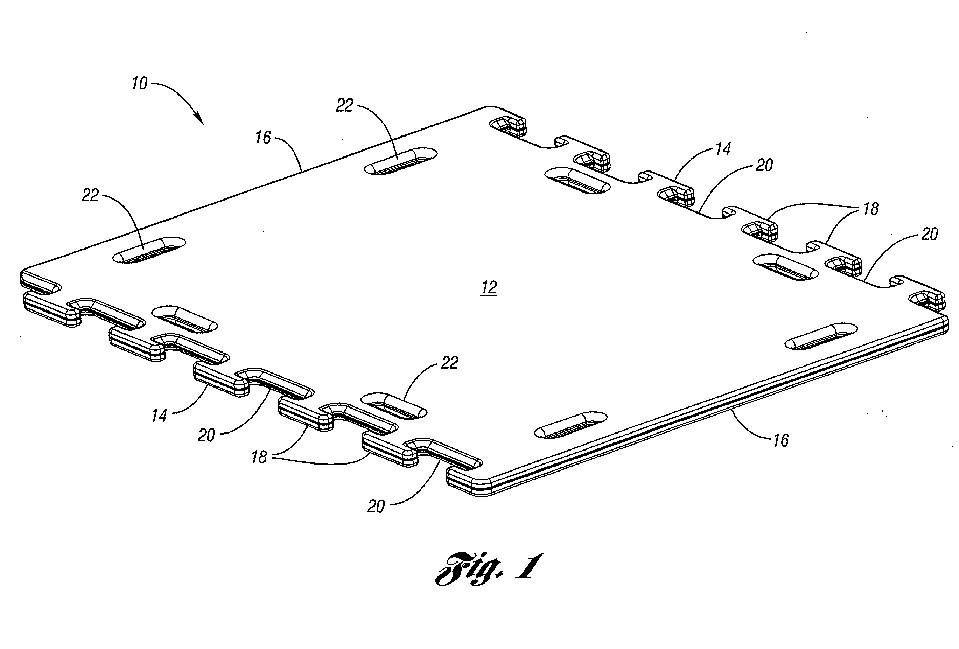

Figure 1 illustrates a support platform 10 according to one embodiment of the present invention, The support platform 10 is generally a planar board having a body portion with an upper support surface 12. The support platform 10 further includes opposed end edges 14 and opposed side edges 16. The end edges 14 each include a plurality of alternating first interlocking members 18 and second interlocking members 20. The first interlocking members 18 are generally T-shaped projections adjacent complementary second interlocking members 20, which are T-shaped openings through the support platform. The first and second interlocking members 18, 20 are beveled and/or tapered to facilitate interlocking. Handle openings 22 are formed adjacent each of the end edges 14 and side edges 16.

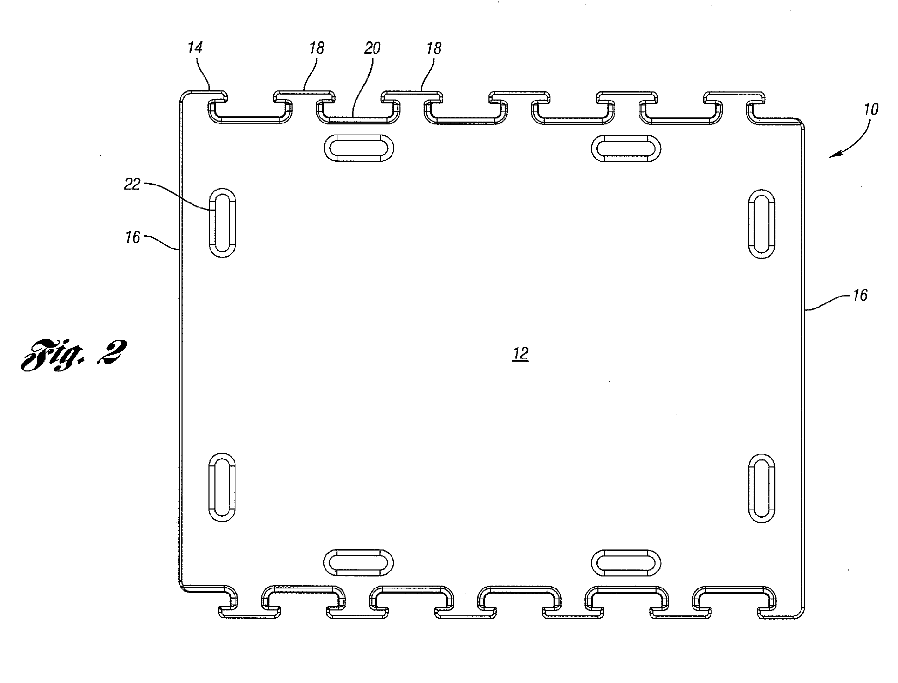

Figure 2 is a top view of the support platform 10. In the embodiment shown, the support platform 10 is generally rectangular. However, other shapes could also be used. Further, first and second interlocking members 18, 20 of different shapes could also be utilized.

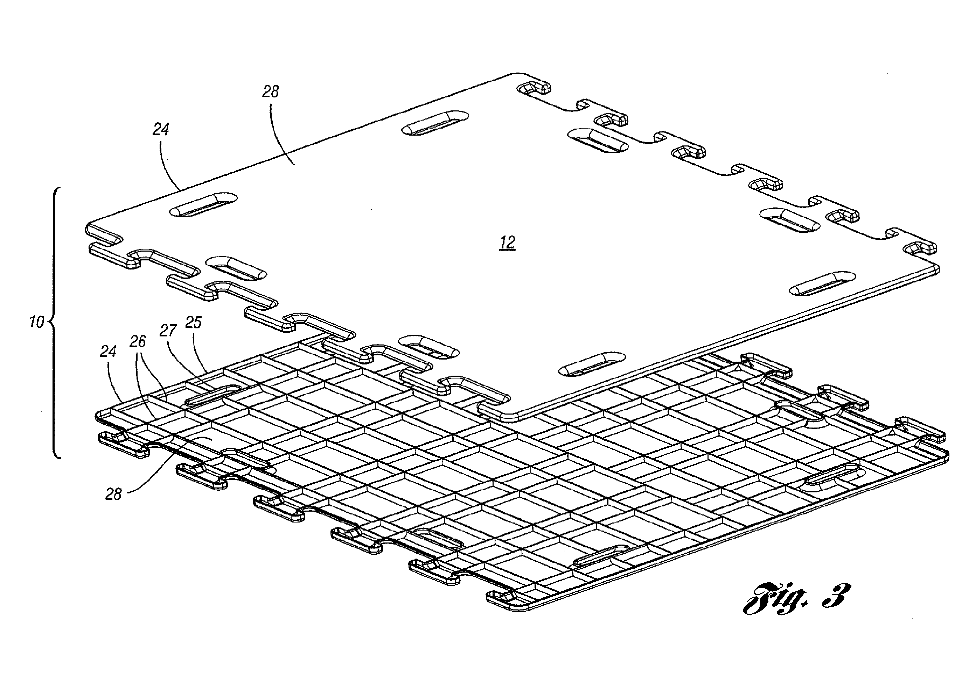

Figure 3 is an exploded view of the support board 10. The support board 10 includes two identical (or, alternatively, symmetric) molded halves 24 each having a planar sheet portion 25 from which extend a plurality of ribs including a peripheral lip 25, cross ribs 26 and ribs 27 that circumscribe the handle openings 22. Each half 24 is injection molded as a separate piece of a thermoplastic or other material. The halves 24 are joined together at the ribs 25-27, by hot plate welding or vibration welding (adhesives or other joining techniques could also be used). Alternatively, the halves 24 could be used separately, with the exposed ribs 25-27 oriented downwardly. Alternatively, a plastic sheet (without integral ribs) could be joined to the ribs 25-27 of one of the halves 24.

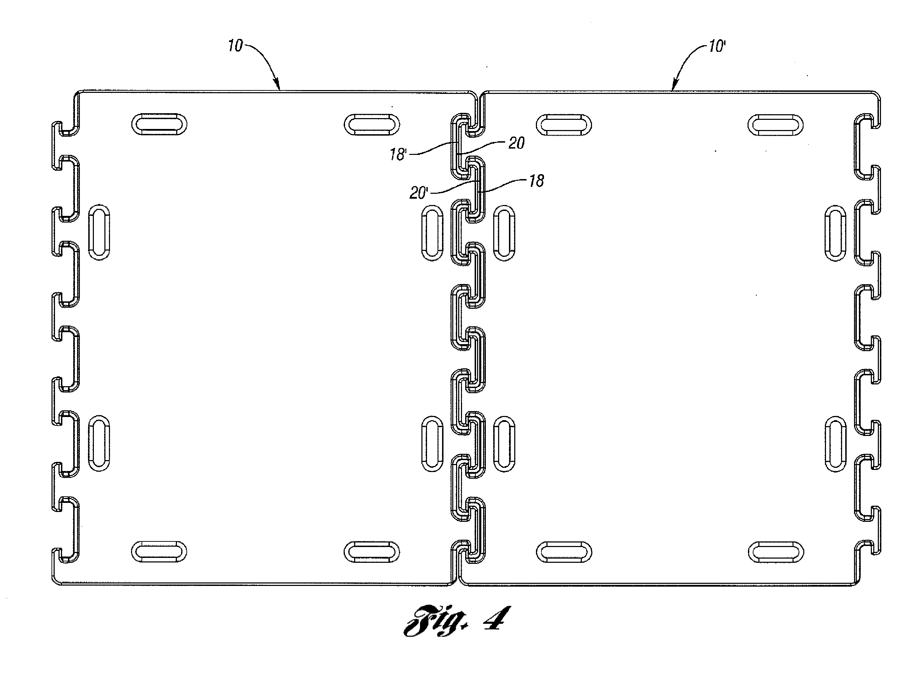

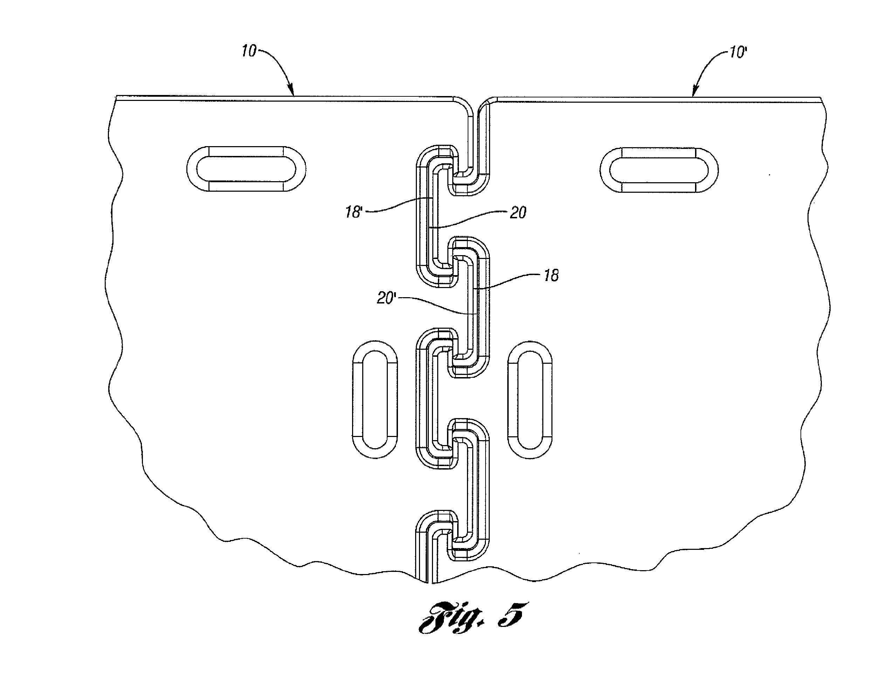

Figure 4 illustrates the support platform 10 interlocked with a similar support platform 10'. Referring to Figure 5, the first interlocking members 18 of the support platform 10 are received in the second interlocking members 20' of the support platform 10'. Similarly, the first interlocking members 18' of the support platform 10' are received in the second interlocking members 20 of the support platform 10. In this manner, pulling the support platform 10 will pull the second support platform 10' with it, and lifting or lowering the support platform 10 will disengage the support platform 10 from the support platform 10'.

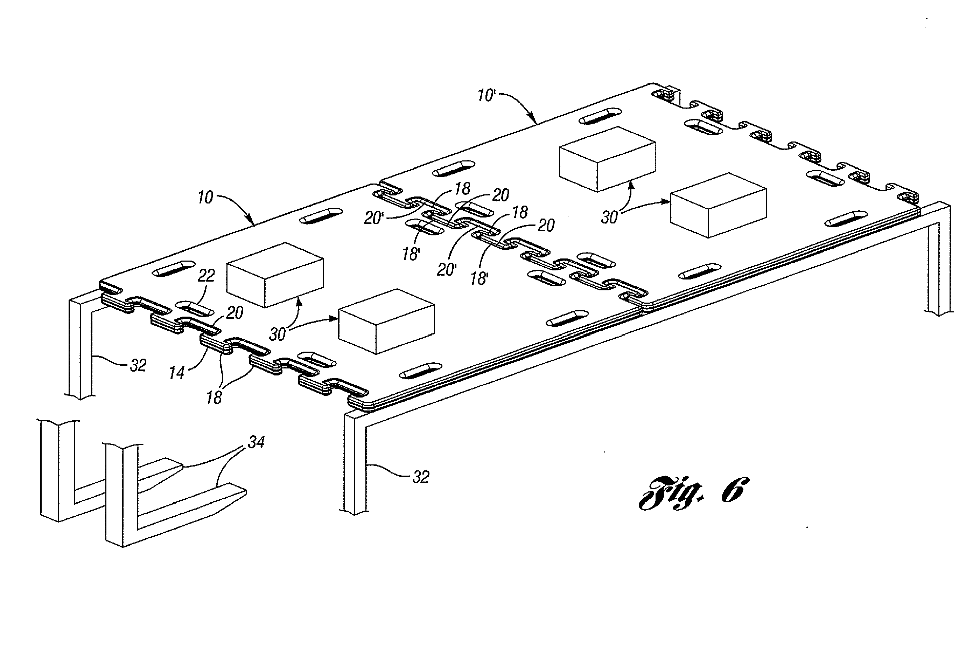

Figure 6 illustrates the two support platforms 10, 10' on a rack 32. Although only two support platforms 10, 10' are shown, it is understood that many more support platforms 10 would be connected in series along the rack 32. Further, in an automated storage and retrieval system, many racks 32 spaced vertically and horizontally from the rack 32 shown, would also have the support platforms 10 stacked thereon. Each support platform 10 has a plurality of items or containers 30 placed thereon (Only two are shown, however, it is anticipated that the support platforms 10 would be fully loaded with stacked items or containers 30). In use, the handling equipment 34 is inserted beneath the first support platform 10 and then pulls the first support platform 10 forwardly on the rack 32, such as by engaging the handles 22 or the first and second interlocking members 18, 20 on the front end edge 14. This also brings the second support platform 10' forward on the racks 32 as well as any subsequent support platforms (not shown). When the first support platform 10 has been pulled off the rack 32 and the second support platform 10' has reached the front of the rack 32, the first support platform 10 is lifted (or lowered) by the handling equipment 34 to disengage the first interlocking members 18, 18' from the second interlocking members 20, 20' of the first support platform 10 and second support platform 10'. Handling equipment 34 then takes the first support platform 10 and the items or containers 30 thereon to the appropriate location. Meanwhile, the second support platform 10' is ready to be accessed by the handling equipment 34 in the future.

Similarly, when a loaded support platform 10 is returned to the rack 32, the handling equipment 34 lowers the support platform 10 such that the first interlocking members 18, 18' interlock with the second interlocking members 20, 20' of the first support platform 10 and second support platform 10'. The handling equipment 34 then pushes the first support platform 10 rearwardly on the rack 32, thereby also pushing the second support platform and any subsequent platforms rearwardly on the rack 32.

Thus, the support platform 10 provides a simple, durable, inexpensive, easy to use device for storing and transporting the items or containers 30 in an automated storage and retrieval system.

In accordance with the provisions of the patent statutes and jurisprudence, exemplary configurations described above are considered to represent a preferred embodiment of the invention. However, it should be noted that the invention can be practiced otherwise than as specifically illustrated and described without departing from its spirit or scope. Alphanumeric identifiers for steps in method claims are for ease of reference in dependent claims and do not signify a required sequence unless otherwise stated.

## Claims

1. A storage system support board (10) having a generally planar body with an upper support surface (12), opposing end edges (14) and opposing side edges (16), a first end edge (14) including at least one first interlocking member (18), a second end edge (14) including at least one second interlocking member (20) complementary to the first interlocking member (18).

2. The support board (10) of claim 1 wherein the first end edge (14) and the second end edge (14) each includes a plurality of the first interlocking members (18) and a plurality of the second interlocking members (20).

3. The support board (10) of claim 1 or 2 wherein the first interlocking members (18) are T-shaped projections and the second interlocking members (20) are T-shaped openings.

4. The support board (10) of any preceding claim wherein the second interlocking members (20) are openings completely through the support board (10).

5. The support board (10) of any preceding claim wherein the first interlocking members (18) can enter the second interlocking members (20) of an adjacent board (10) through an upper side of second interlocking members (20) or through a lower side of the second interlocking members (20).

6. The support board (10) of any preceding claim wherein the planar body includes an upper sheet portion (24) having a plurality of integrally molded upper ribs (25, 26, 27) extending downwardly therefrom.

7. The support board (10) of claim 6 further including a lower sheet portion (24) secured to the upper ribs (25, 26, 27).

8. The support board (10) of claim 7 wherein the lower sheet portion (24) includes a plurality of integrally molded lower ribs (25, 26, 27) extending upwardly therefrom, the lower ribs (25, 26, 27) secured to the upper ribs (25, 26, 27).

9. The support board (10) of any preceding claim wherein the planar body further includes a plurality of handle openings extending therethrough.

10. The support board (10) of any preceding claim wherein the first interlocking members (18) are interlocked with the second interlocking members (20) of a second support board (10), similar to the support board (10).

11. A storage system including the support board (10) and the second support board (10) of claim 10 supported on a rack (32).

12. An automated storage and retrieval system including the rack (32), support board (10) and second support board (10) of claim 11 and further including automated handling equipment (34).

13. A method of operating a storage and retrieval system including the steps of:
a) placing a first item (30) on a first support board (10);
b) placing a second item (30) on a second support board (10);
c) connecting the first support board (10) to the second support board (10);
d) placing the first support board (10) and the second support board (10) on a rack (32);
e) pulling the first support board (10) on the rack (32); and
f) pulling the second support board (10) on the rack (32) by performing said step e) via the connection (18, 20) between the first support board (10) and the second support board (10).

14. The method of claim 13 wherein one or both of the first and second support boards (10) comprises the support board (10) of any of claims 1 to 9.

15. The method of claim 13 or 14 wherein the storage and retrieval system comprises the automated storage and retrieval system of claim 12.
